# EUROPÄISCHE PATENTANMELDUNG

(11) **EP 2 405 173 A2**
(43) Veröffentlichungstag der Anmeldung: **11.01.2012**
(21) Anmeldenummer: 11004583.8
(22) Anmeldetag: 06.06.2011
(51) Int. Cl.: F16L 37/098

(54) **Schnellkupplung für Fluidleitungen**

(30) Priorität: 05.07.2010 DE 102010026100
(71) Anmelder: VERITAS AG, 63571 Gelnhausen (DE)
(72) Erfinder: Hensel, Andre, 63607 Wächtersbach (DE); Stübing, Patrick, 63607 Wächtersbach (DE); Desch, Christian, 63599 Bibergemünd (DE)
(74) Vertreter: Grünecker, Kinkeldey, Stockmair & Schwanhäusser

(57) **Zusammenfassung**

Die Efindung betrifft eine Schnellkupplung für Fluidleitungen, umfassend: einen Stecker mit einem Stutzen und wenigstens einer quer vom Stutzen abragenden Anschlussleitung, wobei der Stutzen dichtend in eine Aufnahmeöffnung eines Gegenstücks einsteckbar ist und über eine Rasteinrichtung mit dem Gegenstück in Rasteingriff bringbar ist; eine Sicherungseinrichtung, die zwischen einer Sicherungsstellung, in welcher der Rasteingriff gegen Lösen gesichert ist, und einer Lösestellung, in welcher der Rasteingriff lösbar ist, überführbar ist; und eine Befestigungseinrichtung, an welcher die Sicherungseinrichtung in wenigstens einer Stellung festlegbar ist. Um eine Schnellkupplung der eingangs genannten Art derart zu verbessern, dass die Sicherungseinrichtung nach dem Einstecken des Stutzens in die Aufnahmeöffnung des Gegenstücks leichter am Stecker montierbar ist, ist erfindungsgemäß vorgesehen, dass die Befestigungseinrichtung auf einer vom Stutzen abweisenden Seite der Anschlussleitung angeordnet ist.

## Beschreibung

Die Erfindung betrifft eine Schnellkupplung für Fluidleitungen, umfassend: einen Stecker mit einem Stutzen und wenigstens einer quer vom Stutzen abragenden Anschlussleitung, wobei der Stutzen dichtend in eine Aufnahmeöffnung eines Gegenstücks einsteckbar ist und über eine Rasteinrichtung mit dem Gegenstück in Rasteingriff bringbar ist; eine Sicherungseinrichtung, die zwischen einer Sicherungsstellung, in welcher der Rasteingriff gegen Lösen gesichert ist, und einer Lösestellung, in welcher der Rasteingriff lösbar ist, überführbar ist; und eine Befestigungseinrichtung, an welcher die Sicherungseinrichtung in wenigstens einer Stellung festlegbar ist.

Eine derartige Schnellkupplung ist aus der WO 2007/042344 A1 bekannt. Bei dieser Schnellkupplung kann die Sicherungseinrichtung in verschiedenen Stellungen rastend am Stecker festgelegt werden. Die Befestigungseinrichtung der Schnellkupplung wird durch Rastnuten am Stutzen gebildet, die vor der Montage der Sicherungseinrichtung am Stutzen anzubringen sind. Nach dem Einstecken in die Aufnahmeöffnung des Gegenstücks ist der Stutzen nicht mehr uneingeschränkt zugänglich, so dass die Sicherungseinrichtung vorzugsweise vor dem Einstecken des Stutzens in die Aufnahmeöffnung des Gegenstücks am Stutzen anzubringen ist.

Der Erfindung liegt die Aufgabe zugrunde, eine Schnellkupplung der eingangs genannten Art derart zu verbessern, dass die Sicherungseinrichtung nach dem Einstecken des Stutzens in die Aufnahmeöffnung des Gegenstücks leichter am Stecker montierbar ist.

Um die der Erfindung zugrunde liegende Aufgabe zu lösen, wird eine Schnellkupplung für Fluidleitungen bereit gestellt, umfassend: einen Stecker mit einem Stutzen und wenigstens einer quer vom Stutzen abragenden Anschlussleitung, wobei der Stutzen dichtend in eine Aufnahmeöffnung eines Gegenstücks einsteckbar ist und über eine Rasteinrichtung mit dem Gegenstück in Rasteingriff bringbar ist; eine Sicherungseinrichtung, die zwischen einer Sicherungsstellung, in welcher der Rasteingriff gegen Lösen gesichert ist, und einer Lösestellung, in welcher der Rasteingriff lösbar ist, überführbar ist; und eine Befestigungseinrichtung, an welcher die Sicherungseinrichtung in wenigstens einer Stellung festlegbar ist, wobei die Befestigungseinrichtung auf einer vom Stutzen abweisenden Seite der Anschlussleitung angeordnet ist. Die Befestigungseinrichtung kann direkt auf der Anschlussleitung angeordnet werden oder auf einem anderen Teil des Steckers, der oberhalb der Anschlussleitung bzw. auf der vom Stutzen abweisenden Seite der Anschlussleitung liegt. Dadurch kann die Sicherungseinrichtung nach dem Einstecken des Stutzens in die Aufnahmeöffnung des Gegenstücks leichter am Stecker montiert und betätigt werden, was die Montage und Handhabung der Schnellkupplung erleichtert. Zudem kann der Zustand der Sicherungseinrichtung leichter überprüft werden, da der Teil des Steckers auf der vom Stutzen abweisenden Seite der Anschlussleitung besser einsehbar und zugänglich ist als der Teil des Steckers auf der dem Stutzen zugewandten Seite der Anschlussleitung.

Vorteilhafte Weiterbildungen der Erfindung sind Gegenstände der Unteransprüche.

Es kann sich als vorteilhaft erweisen, wenn die Sicherungseinrichtung in der Sicherungsstellung und/oder in der Lösestellung vorzugsweise kraftschlüssig und/oder formschlüssig, bevorzugt rastend, an der Befestigungseinrichtung festlegbar ist. Dadurch kann der Benutzer besonders einfach über eine beim Einrasten oder Ausrasten erzeugte haptische Rückmeldung feststellen, ob sich die Sicherungseinrichtung in der Sicherungsstellung und/oder in der Lösestellung befindet. Dazu kann die Sicherungseinrichtung wenigstens einen, vorzugsweise federnden Rastabschnitt umfassen, der in wenigstens einer Raststellung an der Befestigungseinrichtung verrastbar ist. Bevorzugt erfüllt der Rastabschnitt wenigstens eine der folgenden Anforderungen:
- Der Rastabschnitt weist eine der Außenkontur des Steckers angepasste Innenkontur auf und ist gleitend auf dem Stecker führbar.
- Der Rastabschnitt ist federnd ausgebildet.
- Der Rastabschnitt umfasst eine ankerförmige Struktur.
- Der Rastabschnitt umfasst wenigstens einen Rastvorsprung und/oder wenigstens eine Rastaufnahme, der/die rastend an der Befestigungseinrichtung festlegbar ist, wobei der Rastvorsprung und/oder die Rastaufnahme vorzugsweise auf einer der Befestigungseinrichtung zugewandten Seite des Rastabschnitts angeordnet ist.
- Der Rastabschnitt umfasst einen vorzugsweise verrippten Steg, der sich ausgehend von einer Basis bis zu einem freien Ende erstreckt.
- Der Rastabschnitt umfasst wenigstens einen seitlichen Ausleger, der sich vom Steg abzweigend im Wesentlichen in Richtung der Basis des Stegs erstreckt.
- Der Rastabschnitt umfasst einen Sicherungsabschnitt, der die Rasteinrichtung in der Sicherungsstellung blockiert, wobei der Sicherungsabschnitt vorzugsweise am freien Ende des Stegs angeordnet ist.

Die Sicherungseinrichtung kann mehrere identische oder verschiedene Rastabschnitte aufweisen. Die Sicherungseinrichtung kann derart ausgebildet sein, dass sie den Stecker auf einer vom Stutzen abweisenden Seite der Anschlussleitung übergreift. Die Rastabschnitte können sich auf diametral entgegen gesetzten Seiten des Stutzens befinden. Vorzugsweise ist der Rastabschnitt zwischen zwei Führungsabschnitten angeordnet. Der Rastabschnitt und die Führungsabschnitte können sich vorzugsweise im Wesentlichen parallel zueinander von derselben Basis erstrecken. Die Führungsabschnitte können gleitend durch den Stecker und/oder die Befestigungseinrichtung geführt werden. Der Rastvorsprung und/oder die Rastaufnahme kann am Rastabschnitt und/oder dem Führungsabschnitt angeordnet sein.

In einer vorteilhaften Weiterbildung der Erfindung wird die Sicherungseinrichtung zwischen der Sicherungsstellung und Lösestellung wenigstens abschnittsweise durch die Befestigungseinrichtung und/oder durch den Stecker, vorzugsweise durch den Stutzen und/oder durch die Anschlussleitung, geführt. Der Stecker und die Befestigungseinrichtung können eine Führungskulisse mit diversen Führungsabschnitten bilden, welche die Sicherungseinrichtung bei der Überführung zwischen der Sicherungsstellung und Lösestellung verdrehsicher, kippsicher und/oder gleitend unterstützen. Diese Führungsabschnitte erstrecken sich vorzugsweise parallel zu der Richtung, in welcher die Sicherungseinrichtung zwischen der Sicherungsstellung und Lösestellung überführt wird, bevorzugt parallel zur Achse des Stutzens. Wenigstens ein Führungsabschnitt kann sich an einer Außenkontur des Stutzens, an der Anschlussleitung und/oder an der Befestigungseinrichtung befinden. Der Führungsabschnitt ist bevorzugt dem Stutzen zugewandt.

Es kann sich als nützlich erweisen, wenn die Sicherungseinrichtung durch Verschiebung entlang der Achse des Stutzens zwischen der Sicherungsstellung und Lösestellung überführt wird. Dadurch kann die Überführung der Sicherungseinrichtung von der Lösestellung in die Sicherungsstellung mit einer Einsteckbewegung des Stutzens in die Aufnahmeöffnung des Gegenstücks gekoppelt werden. Es ist aber auch möglich, dass die Überführung der Sicherungseinrichtung von der Sicherungsstellung in die Lösestellung mit der Herausziehbewegung des Stutzens aus der Aufnahmeöffnung des Gegenstücks gekoppelt wird. Dadurch kann die Handhabung der Schnellkupplung erleichtert werden.

Es kann von Vorteil sein, wenn die Befestigungseinrichtung lösbar mit dem Stecker, vorzugsweise mit dem Stutzen und/oder mit der Anschlussleitung, verbunden ist. Dadurch kann die Befestigungseinrichtung beispielsweise als Nachrüstbauteil und/oder als Adapter ausgebildet werden, so dass dieselbe Sicherungseinrichtung auf verschiedene Stecker passt.

Es kann praktisch sein, wenn die Befestigungseinrichtung auf den Stecker, vorzugsweise auf den Stutzen und/oder auf die Anschlussleitung, aufgesteckt ist. Dadurch kann die Befestigungseinrichtung ohne Hilfs- und Verbindungsmittel auf den Stecker montiert oder demontiert werden, was die Montage oder Demontage der Schnellkupplung weiter vereinfacht.

Es kann sich als vorteilhaft erweisen, wenn die Befestigungseinrichtung fest, unverlierbar und/oder unlösbar mit dem Stecker, vorzugsweise mit dem Stutzen und/oder mit der Anschlussleitung, verbunden ist. Die Befestigungseinrichtung kann zumindest abschnittsweise auch einteilig mit dem Stecker ausgebildet sein. Dadurch kann die Gefahr verringert werden, dass sich die Befestigungseinrichtung unbeabsichtigt vom Stecker löst und damit der Rasteingriff des Steckers mit dem Gegenstück lösbar wird.

Es kann sich als hilfreich erweisen, wenn die Befestigungseinrichtung den Stutzen und/oder die Anschlussleitung vollumfänglich umschließt. Vorzugsweise ist die Befestigungseinrichtung um den Stutzen und/oder um die Anschlussleitung verschließbar. Dazu können zueinander komplementäre Teile der Befestigungseinrichtung lösbar oder unlösbar um den Stutzen und/oder um die Anschlussleitung verbindbar sein. Bevorzugt umschließt die Befestigungseinrichtung den Stutzen und/oder zwei Anschlussleitungen, die in unterschiedlichen oder diametral entgegen gesetzten Richtungen vom Stutzen abragen, vollumfänglich. Dadurch kann die Befestigungseinrichtung unlösbar mit dem Stecker verbunden werden.

Es kann nützlich sein, wenn die Schnellkupplung eine Verriegelungseinrichtung aufweist, mit welcher die Sicherungseinrichtung in wenigstens einer Stellung, vorzugsweise in der Sicherungsstellung, gegenüber der Befestigungseinrichtung verriegelbar ist. Dadurch kann eine Drittsicherung bewerkstelligt werden, so dass die Gefahr, dass der Rasteingriff zwischen der Rasteinrichtung und dem Gegenstück unbeabsichtigt gelöst wird, noch weiter verringert werden kann.

Es kann sich als praktisch erweisen, wenn die Sicherungseinrichtung und die Befestigungseinrichtung Oberflächen aufweisen, die in einer Stellung, vorzugsweise in der Sicherungsstellung der Sicherungseinrichtung, bündig zueinander angeordnet sind. Dadurch kann der Benutzer leicht erkennen, ob sich die Sicherungseinrichtung in der gewünschten Stellung befindet oder nicht. Vorzugsweise weisen diese Oberflächen entgegen der Einsteckrichtung vom Stutzen ab.

Es kann sich als vorteilhaft erweisen, wenn die Anschlussleitung wenigstens eine Führungsfläche aufweist, um die Sicherungseinrichtung bei der Überführung zwischen der Sicherungsstellung und Lösestellung gleitend zu führen und/oder um die Befestigungseinrichtung verdrehsicher und/oder verschiebesicher gegenüber dem Stecker zu positionieren. Die Führungsfläche kann im Wesentlichen parallel zur Achse des Stutzens und/oder orthogonal zur Achse der Anschlussleitung ausgerichtet sein. Da diese Führungsfläche vorzugsweise vom Stutzen beabstandet ist, kann die Sicherungseinrichtung besonders verdrehsicher und kippsicher unterstützt werden.

Es kann sich als günstig erweisen, wenn die Anschlussleitung zwei Führungsflächen aufweist, die entlang der Achse der Anschlussleitung beabstandet sind. Diese Führungsflächen können im Wesentlichen parallel zur Achse des Stutzens und/oder orthogonal zur Achse der Anschlussleitung ausgerichtet sein. Diese Führungsflächen können auch eine Aufnahme für einen Verbindungsabschnitt der Befestigungseinrichtung bilden. Vorzugsweise werden zwei Verbindungsabschnitte der Befestigungseinrichtung auf zwei Anschlussleitungen, die in unterschiedlichen oder diametral entgegen gesetzten Richtungen vom Stutzen abragen, zwischen jeweils zwei Führungsflächen verdrehsicher und verschiebesicher angeordnet. Dadurch kann die Befestigungseinrichtung in einer bestimmten Position zum Stecker festgelegt werden.

Es kann sich als vorteilhaft erweisen, wenn die Rasteinrichtung zwei federnde Rastarme umfasst, die in Umfangsrichtung des Stutzens versetzt zu der Anschlussleitung vom Stutzen hervorstehen. Die Rastarme stehen vorzugsweise entgegen der Einsteckrichtung vom Stutzen hervor und sind in radialer Richtung federelastisch ausgebildet. Bevorzugt sind die Rastarme in Umfangsrichtung des Stutzens vorzugsweise mittig zwischen zwei Anschlussleitungen angeordnet. Dadurch kann der Stecker zentriert in der Aufnahmeöffnung des Gegenstücks gehalten werden. Überdies sind die Rastarme in dieser Position mittig zwischen zwei Anschlussleitungen leichter für die Sicherungseinrichtung zugänglich.

Es kann sich als praktisch erweisen, wenn der Stecker im Wesentlichen X-förmig, T-förmig, Y-förmig oder L-förmig ausgebildet ist, wobei der Stecker vorzugsweise zwei Anschlussleitungen aufweist, deren Achsen mit der Achse des Stutzens in einer Ebene liegen, oder deren Achsen in zwei Ebenen liegen, die sich im Bereich der Achse des Stutzens schneiden. Dadurch können verschiedene Steckerkonfigurationen bewerkstelligt werden.

Ein eigenständiger Aspekt der vorliegenden Erfindung betrifft einen Bausatz für eine Schnellkupplung für Fluidleitungen, umfassend: einen Stecker mit einem Stutzen und wenigstens einer quer vom Stutzen abragenden Anschlussleitung, wobei der Stutzen dichtend in eine Aufnahmeöffnung eines Gegenstücks einsteckbar ist und über eine Rasteinrichtung mit dem Gegenstück in Rasteingriff bringbar ist; eine Sicherungseinrichtung, um den Rasteingriff gegen Lösen zu sichern; und eine Befestigungseinrichtung, um die Sicherungseinrichtung in wenigstens einer Stellung festzulegen, wobei der Stecker, die Sicherungseinrichtung und die Befestigungseinrichtung derart miteinander verbindbar sind, dass die Sicherungseinrichtung zwischen einer Sicherungsstellung, in welcher der Rasteingriff gegen Lösen gesichert ist, und einer Lösestellung, in welcher der Rasteingriff lösbar ist, überführbar ist und die Sicherungseinrichtung in wenigstens einer Stellung an der Befestigungseinrichtung festlegbar ist. Vorzugsweise ist die Befestigungseinrichtung auf einer vom Stutzen abweisenden Seite der Anschlussleitung anordenbar. Dadurch können die oben genannten Vorteile erzielt werden. Die Schnellkupplung und deren Bestandteile können sämtliche der vorstehend genannten Merkmale aufweisen.

Bevorzugte Weiterbildungen ergeben sich durch Kombinationen der Merkmale der Unteransprüche mit Merkmalen aus der Beschreibung.

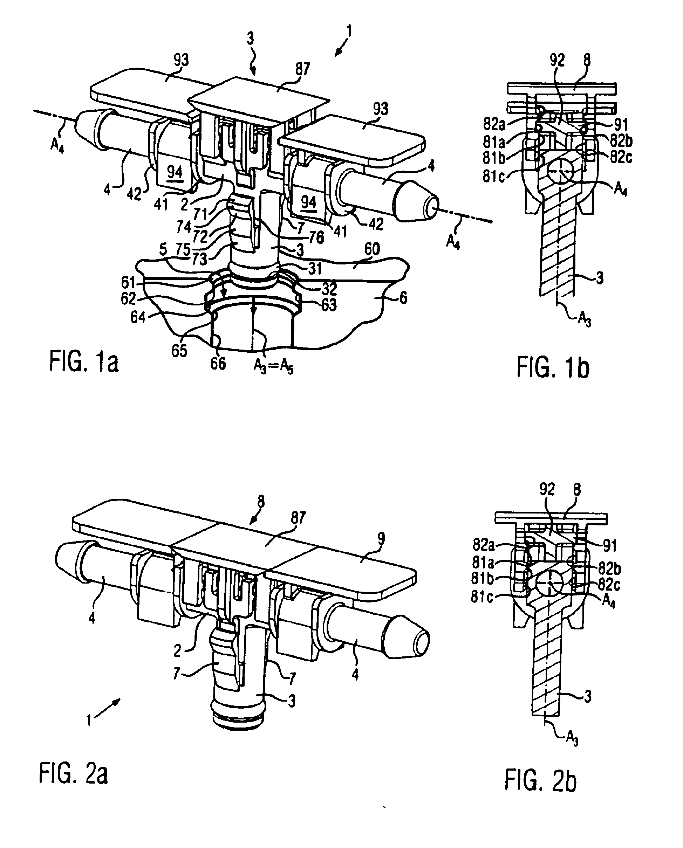

Kurze Beschreibung der Figuren
- Fig. 1 a: zeigt eine perspektivische Darstellung der Schnellkupplung gemäß einem ersten Ausführungsbeispiel der Erfindung mit einem passenden Gegenstück, wobei sich die Sicherungseinrichtung in der Lösestellung befindet.
- Fig. 1 b: zeigt eine vereinfachte Schnittansicht der Schnellkupplung aus Fig. 1 a.
- Fig. 2a: zeigt eine perspektivische Ansicht der Schnellkupplung aus Fig. 1a, wobei sich die Sicherungseinrichtung in der Sicherungsstellung befindet.
- Fig. 2b: zeigt eine vereinfachte Schnittansicht der Schnellkupplung aus Fig. 2a.
- Fig. 3: zeigt ein vergrößertes Detail der Sicherungseinrichtung der Schnellkupplung gemäß den Fig. 1 a und 1 b.
- Fig. 4: zeigt eine perspektivische Ansicht einer Schnellkupplung gemäß einem zweiten Ausführungsbeispiel der Erfindung, wobei der Stecker zwei Anschlussleitungen umfasst, deren Achsen in verschiedenen Ebenen liegen, die sich im Bereich der Achse des Stutzens schneiden.
- Fig. 5: zeigt eine Schnellkupplung gemäß einem dritten Ausführungsbeispiel der Erfindung mit einem Stecker gemäß Fig. 4, wobei die Befestigungseinrichtung unlösbar auf den Stecker montiert ist.
- Fig. 6: zeigt ein Detail einer Befestigungseinrichtung gemäß dem dritten Ausführungsbeispiel der Erfindung.
- Fig. 7: zeigt eine Schnellkupplung gemäß einem vierten Ausführungsbeispiel der Erfindung, wobei sich die Sicherungseinrichtung in der Lösestellung befindet und eine Verriegelungseinrichtung in der Entriegelungsstellung befindet.
- Fig. 8: zeigt die Schnellkupplung aus Fig. 7, wobei sich die Sicherungseinrichtung in der Sicherungsstellung befindet und die Verriegelungseinrichtung in der Verriegelungsstellung befindet.
- Fig. 9: zeigt eine Schnellkupplung gemäß einem fünften Ausführungsbeispiel der Erfindung, wobei die Befestigungseinrichtung unlösbar auf den Stecker montiert ist und verschweißte Teile umfasst.
- Fig. 10: zeigt eine Schnellkupplung gemäß einem sechsten Ausführungsbeispiel der Erfindung, wobei sich die Sicherungseinrichtung in der Lösestellung befindet.
- Fig. 11: zeigt eine perspektivische Ansicht der Befestigungseinrichtung der Schnellkupplung gemäß Fig. 10.
- Fig. 12: zeigt eine perspektivische Ansicht der Sicherungseinrichtung der Schnellkupplung gemäß Fig. 10.
- Fig. 13: zeigt die Schnellkupplung gemäß Fig. 10 in einem eingesteckten Zustand in einer Aufnahmeöffnung eines Gegenstücks, wobei sich die Sicherungseinrichtung in der Sicherungsstellung befindet.
- Fig. 14a: zeigt eine Schnellkupplung gemäß einem siebten Ausführungsbeispiel der Erfindung, wobei sich die Sicherungseinrichtung in der Lösestellung befindet.
- Fig. 14b: zeigt eine schematische Schnittansicht der Schnellkupplung gemäß Fig. 14a.
- Fig. 15a: zeigt die Schnellkupplung gemäß Fig. 14a, wobei sich die Sicherungseinrichtung in der Sicherungsstellung befindet.
- Fig. 15b: zeigt eine schematische Schnittansicht der Schnellkupplung gemäß Fig. 15a.
- Fig. 16: zeigt eine perspektivische Ansicht einer Schnellkupplung gemäß einem achten Ausführungsbeispiel der Erfindung.
- Fig. 17: zeigt eine andere perspektivische Ansicht der Schnellkupplung gemäß Fig. 16.
- Fig. 18: zeigt eine perspektivische Ansicht einer Schnellkupplung gemäß einem neunten Ausführungsbeispiel der Erfindung, wobei sich die Sicherungseinrichtung in der Lösestellung befindet.
- Fig. 19: zeigt die Schnellkupplung gemäß Fig. 18, wobei sich die Sicherungseinrichtung in der Sicherungsstellung befindet.

### Detaillierte Beschreibung der bevorzugten Ausführungsbeispiele

### Erstes Ausführungsbeispiel

Das erste Ausführungsbeispiel der Erfindung, das nachstehend mit Bezug auf die Figuren 1 bis 3 beschrieben wird, betrifft eine als Leckölstecker ausgebildete Steck-Schnellkupplung 1 für Fluidleitungen. Figur 1a zeigt eine perspektivische Ansicht der erfindungsgemäßen Schnellkupplung 1 sowie ein Gegenstück 6 mit passender Aufnahmeöffnung 5, wobei sich die Sicherungseinrichtung 8 in der Lösestellung befindet.

Die erfindungsgemäße Schnellkupplung 1 umfasst einen einstückigen, im Wesentlichen T-förmigen Stecker 2 aus glasfaserverstärktem Kunststoff (z.B. PA66+6 GF30 bzw. Polyamid 66+6 mit 30% Glasfaseranteil) mit einem Stutzen 3 und zwei quer vom Stutzen 3 abragenden Anschlussleitungen 4.

Der Stutzen 3 ist dichtend in die Aufnahmeöffnung 5 des Gegenstücks 6 einsteckbar. In Einsteckrichtung der Schnellkupplung 1, die durch den Pfeil angezeigt wird, ist an einem Ende des Stutzens 3 ein Dichtungsring 31 in einer umlaufenden Nut 32 gehalten.

Anzuschließende Leckölleitungen sind auf die konusförmigen Endstücke der Anschlussleitungen 4 aufsteckbar. Die Achsen A4 der Anschlussleitungen 4 und die Achse A3 des Stutzens 3 liegen in derselben Ebene. Dabei schließen die Achsen A4 der Anschlussleitungen 4 mit der Achse A3 des Stutzens 3 jeweils einen Winkel von 90° ein. Die Achse A3 des Stutzens 3 fällt im eingesteckten Zustand bestimmungsgemäß mit der Achse A5 der Aufnahmeöffnung 3 zusammen.

Die im Gegenstück 6 definierte Aufnahmeöffnung 5 umfasst, ausgehend von einer Oberfläche 60 des Gegenstücks 6, eine Fase 61 im Eingangsbereich, einen Rastvorsprung 62, eine konusförmige Aufweitung 63, eine Hinterschneidung 64, eine konusförmige Verjüngung 65 und einen Haltebereich 66.

Zwei identisch ausgebildete, federnde Rastarme 7 ragen auf diametral gegenüber liegenden Seiten der Achse des Stutzens 3 entgegen der Einsteckrichtung vom Stutzen 3 ab und sind mit dem Gegenstück 6 in Rasteingriff bringbar. Jeder Rastarm 7 weist eine Keilfläche 71 auf, die im Wesentlichen am freien Ende des Rastarms 7 angrenzend an den größten Radius des Rastarms 7 ausgebildet ist und entgegen der Einsteckrichtung vom Stutzen 2 abweist. Die Keilfläche 71 weist in etwa einen Winkel von 45° zur Achse A3 des Stutzens 2 auf. Des weiteren weist jeder Rastarm 7 an der Außenseite zwei Keilflächen 72, 73 auf, die in Einsteckrichtung vom Stutzen 3 abweisen, wobei die Keilfläche 72 angrenzend an den größten Radius des Rastarms 7 ausgebildet ist und die Keilfläche 73 unmittelbar angrenzend an den zylindrischen Teil des Stutzens 3 ausgebildet ist. Die Keilflächen 72, 73 weisen jeweils in etwa einen Winkel von 20° zur Achse A3 des Stutzens 3 auf. Aufgrund der unterschiedlichen Neigungswinkel der Keilflächen 71 und 72 zur Achse A3 des Stutzens 3 ist eine Einsteckkraft des Stutzens 3 kleiner als eine Auszugkraft des Stutzens 3. Zwischen den Keilflächen 71, 72 und 73 befinden sich Gleitflächen 74 und 75, die im Wesentlichen parallel zur Achse A3 des Stutzens 2 verlaufen, wobei die Gleitfläche 74 den größten Radius des Rastarms 7 definiert. Die Außenkontur der Rastarme 7 ist an die Innenkontur der Aufnahmeöffnung 5 angepasst. Eine zum Stutzen 3 weisende Innenseite 76 des Rastarms 7 ist als Keilfläche ausgebildet und ist vom Fußpunkt bis zum Ende des Rastarms 7 kontinuierlich gegenüber der Achse des Stutzens 2 geneigt, vorzugsweise in einem Winkel von ca. 10°.

Die Sicherungseinrichtung 8 ist einteilig aus Kunststoff oder Metall ausgebildet und übergreift den Stecker 2 auf einer vom Stutzen 3 abweisenden Seite der Anschlussleitungen 4. Dabei umfasst die Sicherungseinrichtung 8 mehrere Rastvorsprünge 81a, 81b, 81c, die verschiedene Rastaufnahmen 82a, 82b, 82c begrenzen bzw. definieren. Die Rastvorsprünge 81a, 81b, 81c und Rastaufnahmen 82a, 82b, 82c befinden sich an den sich gegenüber liegenden Innenseiten zweier federnder, im Wesentlichen ankerförmiger Rastabschnitte. Die Rastabschnitte umfassen jeweils einen verrippten Steg 83, an dessen Ende sich ein Sicherungsabschnitt 85 befindet, und zwei seitliche Ausleger 84. Die Ausleger 84 sind jeweils im Wesentlichen in einem mittleren Bereich des Stegs 83 angeschlagen und erstrecken sich entgegen der Erstreckungsrichtung des Stegs 83, um die ankerförmige Struktur zu bilden. Sowohl der Steg 83 als auch die seitlichen Ausleger 84 weisen federnde Eigenschaften auf. Jeweils zwei Führungsabschnitte 86 stehen parallel, in derselben Richtung und in derselben Ebene, neben jedem Rastabschnitt von einem im Wesentlichen flachen Betätigungsabschnitt 87 hervor, so dass zwei Führungsabschnitte 86 jeden Rastabschnitt seitlich flankieren. Der Betätigungsabschnitt 87 bildet die gemeinsame Basis aller Rastabschnitte und Führungsabschnitte 86. Die Sicherungseinrichtung 8 ist verdrehsicher, verschieblich und unverlierbar auf der Befestigungseinrichtung 9 angeordnet und ist durch Verschiebung in bzw. entgegen der Einsteckrichtung zwischen der Lösestellung, in welcher der Rasteingriff der Schnellkupplung 1 lösbar ist, und der Sicherungsstellung, in welcher der Rasteingriff sichergestellt ist, überführbar. Über die Rastvorsprünge 81 a, 81 b, 81 c und Rastaufnahmen 82a, 82b, 82c an den einander zugewandten Innenseiten der Rastabschnitte ist die Sicherungseinrichtung 8 in der Lösestellung und in der Sicherungsstellung an der Befestigungseinrichtung 9 festlegbar und verrastbar.

Die einteilig aus Kunststoff oder Metall ausgebildete Befestigungseinrichtung 9 umfasst einen im Wesentlichen flächigen Befestigungsabschnitt 91, an welchem die Sicherungseinrichtung 8 rastend festlegbar ist. Der Befestigungsabschnitt 91 erstreckt sich im Wesentlichen in einer Ebene, die orthogonal zur Achse A3 des Stutzens 3 angeordnet ist. Versteifende Längs- und Querrippen 92 erstrecken sich vorzugsweise senkrecht zu dem Befestigungsabschnitt 91. An jedem der beiden Enden des Befestigungsabschnitts 91 befindet sich ein Betätigungsabschnitt 93 mit einer Oberfläche, die in der Sicherungsstellung bündig mit einer Oberfläche der Sicherungseinrichtung 8 angeordnet ist, und ein Verbindungsabschnitt 94, der rastend auf einer der Anschlussleitungen 4 festlegbar ist. Jeder Verbindungsabschnitt 94 passt genau zwischen zwei einteilig mit den Anschlussleitungen 4 ausgebildete Führungsflächen 41, 42, die sich senkrecht zu den Achsen A4 der Anschlussleitungen 4 erstrecken. Die Konturen und Dimensionen des Steckers 2, der Befestigungseinrichtung 9 und der Sicherungseinrichtung 8 sind derart aufeinander abgestimmt, dass der Stecker 2 und die Befestigungseinrichtung 9 eine Führungskulisse für die Sicherungseinrichtung 8 bilden, durch welche die Sicherungseinrichtung 8 verdrehsicher, kippsicher und gleitend zwischen der Lösestellung und der Sicherungsstellung überführbar ist. Die Führungsabschnitte 86 der Sicherungseinrichtung 8 werden dabei gleitend zwischen den Betätigungsabschnitten 93 der Befestigungseinrichtung 9 sowie zwischen den inneren Führungsflächen 41 aufgenommen. Die Rastabschnitte weisen eine auf die Außenkontur des Stutzens 3 abgestimmte Innenkontur auf und gleiten auf den diametral entgegen gesetzten Außenseiten des Stutzens 3.

Die bevorzugte Anwendung der Erfindung wird nachstehend mit Bezug auf die Zeichnungen im Detail beschrieben.

Die erfindungsgemäße Schnellkupplung 1 wird in Einsteckrichtung in die Aufnahmeöffnung 5 des Gegenstücks 6 eingesteckt, während die Sicherungseinrichtung 8 vorzugsweise in der Lösestellung an der Befestigungseinrichtung 9 verrastet ist. Beim Einsteckvorgang wird der Stutzen 3 zunächst über die in Einsteckrichtung vom Stutzen 3 abweisenden Keilflächen 72, 73 in der Aufnahmeöffnung 5 zentriert. Ohne Aufbringen einer Kraft in Einsteckrichtung (Einsteckkraft) liegen die in Einsteckrichtung vom Stutzen 3 abweisenden Keilflächen 72 an dem Rastvorsprung 62 an. Durch Aufbringen einer Einsteckkraft wirken die Rastarme 7 über Keileingriffe mit dem Rastvorsprung 62 zusammen, so dass die Rastarme 7 radial nach innen verdrängt werden, um mit der Gleitfläche 75 über den Rastvorsprung 62 zu gleiten. Aufgrund der federnden Eigenschaften der Rastarme 7 stellen sich diese zurück in eine vom Stutzen 3 abragende Position, so dass die Rastarme 7 hinter dem Rastvorsprung 62 in die Hinterschneidung 64 gelangen und verrasten. Die entgegen der Einsteckrichtung vom Stutzen 3 abweisenden Keilflächen 71 gelangen mit dem Rastvorsprung 62 und der Aufweitung 63 in Eingriff, wobei die Rastarme 7 vollständig innerhalb der Aufnahmeöffnung 5 aufgenommen sind und nicht aus der Aufnahmeöffnung 5 über die Oberfläche 60 des Gegenstücks 6 hervorstehen. Damit befindet sich die Schnellkupplung 1 im Rasteingriff mit dem Gegenstück 6. In der Lösestellung, die in Fig. 1 a schematisch dargestellt ist, befindet sich der Befestigungsabschnitt 91 in der zweiten Rastaufnahme 82b. Dabei befindet sich die Sicherungseinrichtung 8 mit den Rastarmen 7 nicht in Eingriff, so dass die Rastarme 7 radial nach innen verdrängbar sind.

Die Sicherungseinrichtung 8 wird nun durch Verschiebung gegenüber der Befestigungseinrichtung 9 in Einsteckrichtung von der Lösestellung in die Sicherungsstellung überführt. Beim Überführen der Sicherungseinrichtung 8 von der Lösestellung in die Sicherungsstellung wirken die Sicherungsabschnitte 85 mit den Rastarmen 7 derart zusammen, dass die Rastarme 7 in der Sicherungsstellung nicht in radialer Richtung nach innen verdrängt werden können. Ferner werden die Rastarme 7 vom Stutzen 3 abgespreizt und über einen Keileingriff mit dem Rastvorsprung 62 tiefer in die Aufnahmeöffnung 5 gedrängt. Dadurch wird eine sekundäre Sicherung verwirklicht. In der Sicherungsstellung befindet sich der Befestigungsabschnitt 91 in der ersten Rastaufnahme 82a, so dass die Sicherungseinrichtung 8 an der Befestigungseinrichtung 9 festgelegt bzw. verrastet ist. In der Sicherungsstellung verläuft die vom Stutzen 3 abweisende Oberfläche des Betätigungsabschnitts 87 der Sicherungseinrichtung 8 bündig mit den vom Stutzen 3 abweisenden Oberflächen der Betätigungsabschnitte 93 der Befestigungseinrichtung 9.

Die Sicherungseinrichtung 8 kann durch Verschiebung entgegen der Einsteckrichtung von der Sicherungsstellung auch wieder in die Lösestellung überführt werden. In der Lösestellung befindet sich die Sicherungseinrichtung 8 mit den Rastarmen 7 nicht in Eingriff, so dass die Rastarme 7 radial nach innen verdrängbar sind. Durch Aufbringen einer Kraft entgegen der Einsteckrichtung (Auszugkraft) kann die Schnellkupplung 1 aus der Aufnahmeöffnung 5 herausgezogen werden. In der Lösestellung ist die Sicherungseinrichtung 8 wieder an der Befestigungseinrichtung 9 festgelegt bzw. verrastet, wobei sich der Befestigungsabschnitt 91 in der zweiten Rastaufnahme 82b befindet. Die Sicherungseinrichtung 8 ist somit reversibel zwischen Lösestellung und Sicherungsstellung überführbar.

Die nachstehenden Ausführungsbeispiele beruhen im Wesentlichen auf dem ersten Ausführungsbeispiel. Für funktionsgleiche Merkmale werden dieselben Bezugszeichen verwendet wie im ersten Ausführungsbeispiel. Fortan werden lediglich die wesentlichen Unterschiede zum ersten Ausführungsbeispiel erläutert und von einer Wiederholung der vorangegangenen Beschreibung wird nach Möglichkeit abgesehen.

### Zweites Ausführungsbeispiel

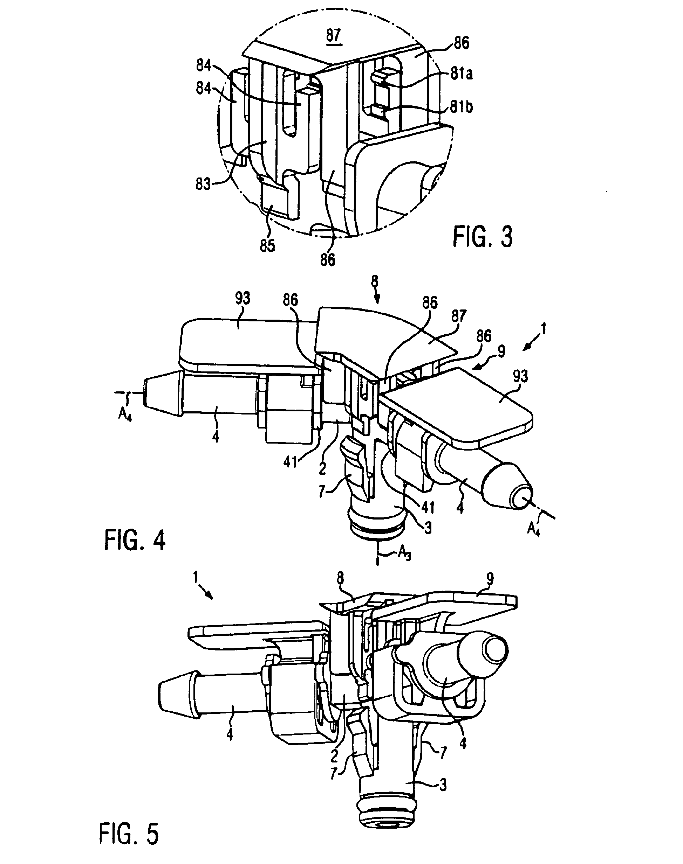

Das zweite Ausführungsbeispiel der Erfindung wird nachstehend mit Bezug auf die Figur 4 beschrieben. Die Ausführungen beziehen sich auf einen Zustand, in welchem die Sicherungseinrichtung 8 an der Befestigungseinrichtung 9 festgelegt ist und die Befestigungseinrichtung 9 auf den Stecker 2 montiert ist. Abweichend vom ersten Ausführungsbeispiel erstrecken sich die Achsen A4 der Anschlussleitungen 4 in einer Ebene, die senkrecht zur Achse A3 des Stutzens 3 angeordnet ist bzw. in verschiedenen Ebenen, die sich in der Achse A3 des Stutzens 3 schneiden. Um die unterschiedliche Winkelstellung der Achsen A4 der Anschlussleitungen 4 zu kompensieren, ist der Befestigungsabschnitt 91 der Befestigungseinrichtung 9 entsprechend des Verlaufs der Achsen A4 geknickt. Ferner sind die Führungsabschnitte 86 der Sicherungseinrichtung 8 auf der Seite einer Anschlussleitung 4 im Wesentlichen parallel zu der Ebene ausgerichtet, die durch die Achse A4 der zugehörigen Anschlussleitung 4 und die Achse A3 des Stutzens 3 aufgespannt wird. Die Rastabschnitte erstrecken sich ebenso parallel zu dieser Ebene. Weiter sind die Führungsabschnitte 86 auf der Seite der anderen Anschlussleitung 4 im Wesentlichen parallel zu der Ebene ausgerichtet, die durch die Achse A4 der anderen Anschlussleitung 4 und die Achse A3 des Stutzens 3 aufgespannt wird. Wie im ersten Ausführungsbeispiel sind die Konturen und Dimensionen des Steckers 2, der Befestigungseinrichtung 9 und der Sicherungseinrichtung 8 derart aufeinander abgestimmt, dass der Stecker 2 und die Befestigungseinrichtung 9 eine Führungskulisse für die Sicherungseinrichtung 8 bilden, durch weiche die Sicherungseinrichtung 8 verdrehsicher, kippsicher und gleitend zwischen der Lösestellung und der Sicherungsstellung überführbar ist.

### Drittes Ausführungsbeispiel

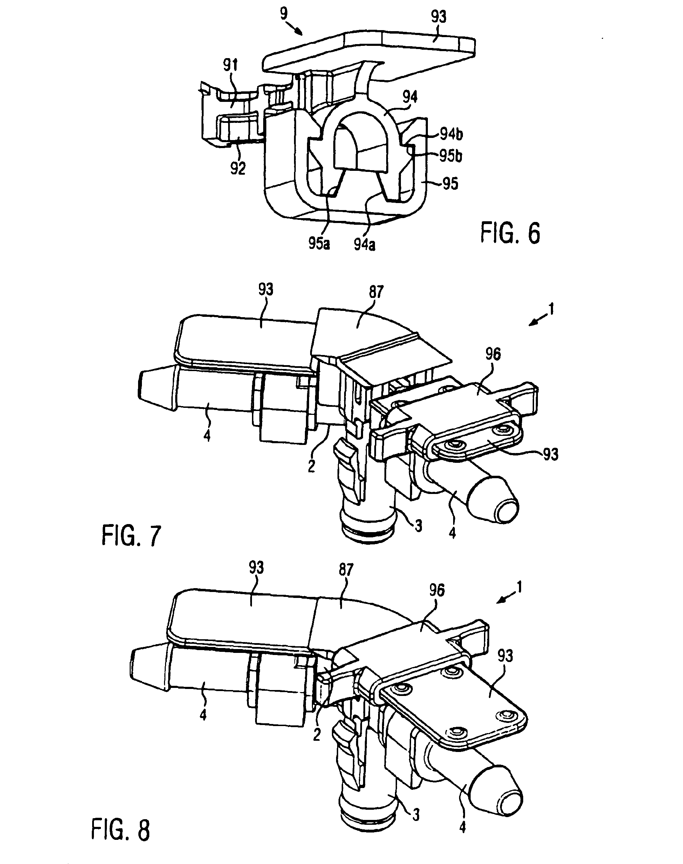

Das dritte Ausführungsbeispiel der Erfindung, das auf dem zweiten Ausführungsbeispiel gemäß Fig. 4 basiert, wird nachstehend mit Bezug auf die Figuren 5 und 6 beschrieben. Abweichend vom zweiten Ausführungsbeispiel ist die Befestigungseinrichtung 9 unlösbar auf den Anschlussleitungen 4 montiert. Dazu ist der Verbindungsabschnitt 94 jeder Befestigungseinrichtung 9 mit einem im Wesentlichen W-förmigen Bügel 95 formschlüssig verrastet und um den Umfang der zugehörigen Anschlussleitung 4 geschlossen. Wie in Fig. 6 dargestellt, verschließt der Bügel 95 eine Aufnahmeöffnung des Verbindungsabschnitts 94, in welcher die Anschlussleitung 4 aufgenommen ist, wobei sich ein keilförmiger Vorsprung 95a des Bügels 95 mit zwei von der Aufnahme abweisenden Keilflächen 94a an den Enden der Schenkel des Verbindungsabschnitts 94 in Keileingriff befindet. Rastvorsprünge 95b an den Innenseiten der freien Enden des Bügels 95 sind mit Rastvorsprüngen 94b an den Au-βenseiten der Schenkel des Verbindungsabschnitts 94 verrastet. Die Rastvorsprünge 94b, 95b wirken beim Aufrasten des Bügels 95 auf den Verbindungsabschnitt 94 über Keilflächen derart zusammen, dass der Bügel 95 leichter mit dem Verbindungsabschnitt 94 verrastbar als davon lösbar ist.

### Viertes Ausführungsbeispiel

Das vierte Ausführungsbeispiel der Efindung, das ebenfalls auf dem zweiten Ausführungsbeispiel gemäß Fig. 4 basiert, wird nachstehend mit Bezug auf die Figuren 7 und 8 beschrieben. Ergänzend zum zweiten Ausführungsbeispiel umfasst die Befestigungseinrichtung 9 eine Verriegelungseinrichtung 97, die zwischen einem Entriegelungszustand (Fig. 7), in welchem die Sicherungseinrichtung 8 zwischen der Sicherungsstellung und der Lösestellung überführbar ist, und einem Verriegelungszustand (Fig. 8), in welchem die Sicherungseinrichtung 8 in der Sicherungsstellung verriegelt ist, überführbar ist. In der Sicherungsstellung der Sicherungseinrichtung 8 verlaufen die vom Stutzen 3 abweisenden Oberflächen der Betätigungsabschnitte 87, 93 der Sicherungseinrichtung 8 und der Befestigungseinrichtung 9 bündig zueinander. In diesem Zustand kann die gleitend auf einem Betätigungsabschnitt 93 der Befestigungseinrichtung 9 geführte Verriegelungseinrichtung 97 derart über den Betätigungsabschnitt 87 der Sicherungseinrichtung 8 geschoben werden, dass die Bewegung der Sicherungseinrichtung 8 gegenüber der Befestigungseinrichtung 9 verriegelt, blockiert und/oder gesperrt ist. Somit ist die Sicherungseinrichtung 8 nicht aus der Sicherungsstellung in die Lösestellung überführbar. Dadurch wird eine tertiäre Sicherung verwirklicht.

### Fünftes Ausführungsbeispiel

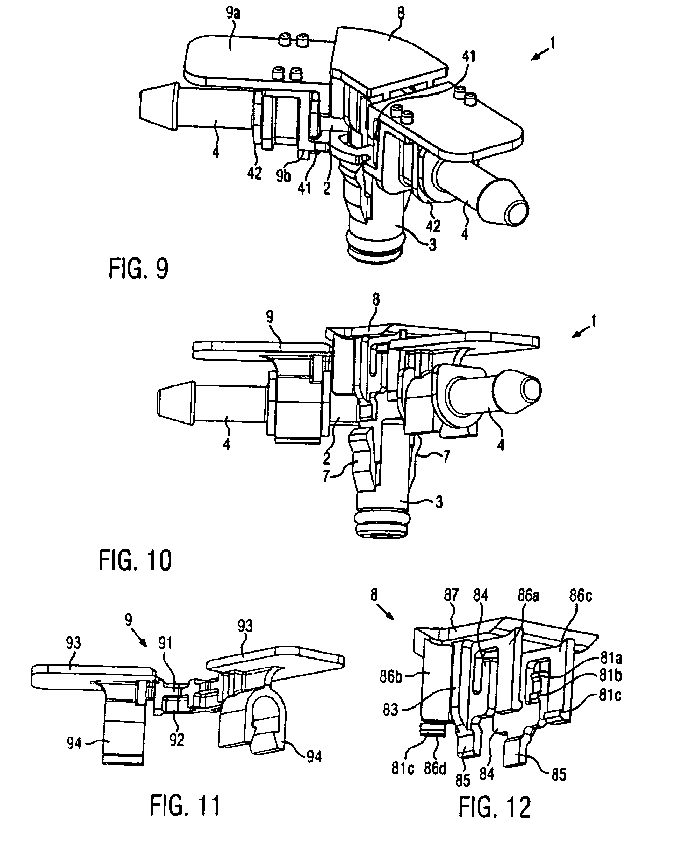

Das fünfte Ausführungsbeispiel der Erfindung, das ebenfalls auf dem zweiten Ausführungsbeispiel gemäß Figur 4 basiert, wird nachstehend mit Bezug auf die Figur 9 beschrieben. Abweichend vom zweiten Ausführungsbeispiel umfasst die Befestigungseinrichtung 9 zwei komplementäre Teile 9a, 9b, die von verschiedenen Seiten um die Anschlussleitungen 4 anordenbar sind und miteinander verschweißbar sind, um die Befestigungseinrichtung 9 unlösbar mit dem Stecker 3 zu verbinden. Zur Montage der verschweißbaren Teile werden Schweißnocken des einen Teils 9b durch komplementäre Schweißnockenöffnungen des anderen Teils 9a gesteckt und anschließend verschweißt, um die beiden Teile 9a, 9b form- und stoffschlüssig zu verbinden. Dabei umfasst der untere Teil 9b eine Öffnung, durch welche sich der Stecker 2 und die Sicherungsabschnitte 85 der Sicherungseinrichtung 8 erstrecken. Im dargestellten Zustand ist die Befestigungseinrichtung 9 vollumfänglich um den Stutzen 3 und um beide Anschlussleitungen 4 geschlossen. Die Teile 9a, 9b können über die inneren und äußeren Führungsflächen 41, 42 verschiebesicher und verdrehsicher in genau einer Position zum Stecker 2 festgelegt werden. Die Konturen und Dimensionen des Steckers 2, der Befestigungseinrichtung 9 und der Sicherungseinrichtung 8 sind derart aufeinander abgestimmt, dass der Stecker 2 und die Befestigungseinrichtung 9 eine Führungskulisse für die Sicherungseinrichtung 8 bilden, durch welche die Sicherungseinrichtung 8 verdrehsicher, kippsicher und gleitend zwischen der Lösestellung und der Sicherungsstellung überführbar ist.

### Sechstes Ausführungsbeispiel

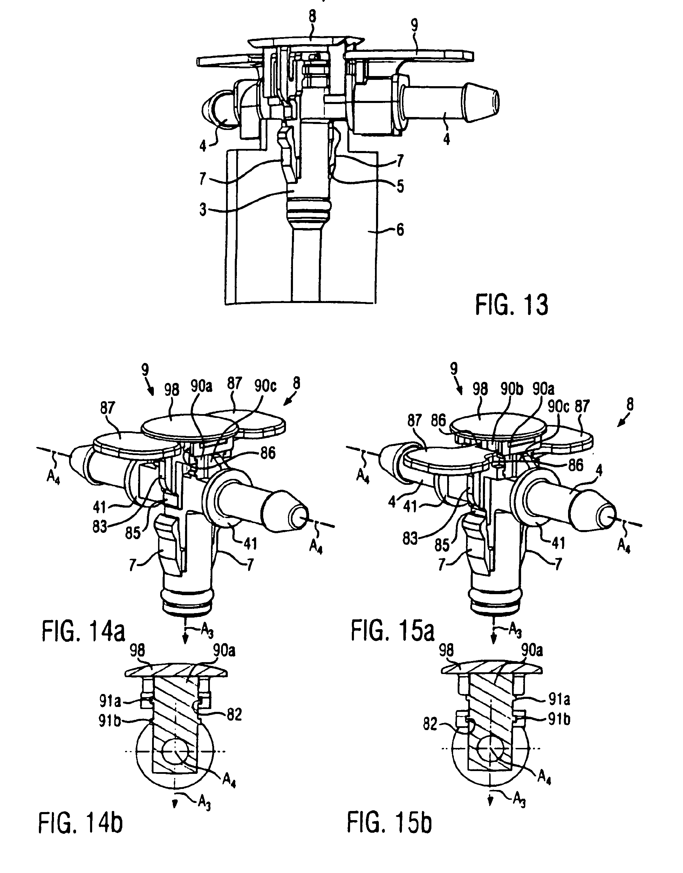

Das sechste Ausführungsbeispiel der Erfindung, das ebenfalls auf dem zweiten Ausführungsbeispiel gemäß Fig. 4 basiert, wird nachstehend mit Bezug auf die Figuren 10 bis 13 beschrieben. Figur 10 zeigt die Schnellkupplung 1 in der Lösestellung der Sicherungseinrichtung 8. Figur 11 zeigt eine perspektivische Ansicht der Befestigungseinrichtung 9. Figur 11 zeigt eine perspektivische Ansicht der Sicherungseinrichtung 8. Abweichend vom zweiten Ausführungsbeispiel umfasst die Sicherungseinrichtung 8 verschiedene Rastabschnitte und Führungsabschnitte 86a, 86b, 86c, 86d, die auf verschiedenen Seiten des Steckers 2 und der Befestigungseinrichtung 9 angeordnet sind. Der Rastabschnitt auf der Krümmungsinnenseite des Steckers 2 (die Seite mit dem kleineren Winkelabstand der Achsen A4 der Anschlussleitungen 4) umfasst einen verrippten Steg 83 mit endseitigem Sicherungsabschnitt 85 und einem seitlichen Ausleger 84. Der Ausleger 84 befindet sich zwischen dem Steg 83 und dem ersten Führungsabschnitt 86a. Der erste Führungsabschnitt 86a bildet mit dem Steg 83 und dem Ausleger 84 in etwa eine G-förmige Struktur, deren schlitzförmige Öffnung sich in einer vom Betätigungsabschnitt 87 abweisenden Richtung erstreckt. Der zweite Führungsabschnitt 86b ist über seine gesamte Länge mit dem Steg 83 verbunden und erstreckt sich in einer anderen Ebene als der erste Führungsabschnitt 86a. Der Rastabschnitt auf der Krümmungsaußenseite des Steckers 2 (die Seite mit dem größeren Winkelabstand der Achsen A4 der Anschlussleitungen 4) ist wie im ersten Ausführungsbeispiel ankerförmig ausgebildet. Der dritte Führungsabschnitt 86c erstreckt sich parallel zum ersten Führungsabschnitt 86a und bildet mit dem Steg 83 und dem Ausleger 84 in etwa eine G-förmige Struktur, deren schlitzförmige Öffnung sich in einer vom Betätigungsabschnitt 87 abweisenden Richtung erstreckt. Der vierte Führungsabschnitt 86d ist beabstandet von dem Rastabschnitt auf der Krümmungsaußenseite angeordnet und erstreckt sich parallel zum zweiten Führungsabschnitt 86b. Die Rastvorsprünge 81 a, 81 b, 81 c sind an den gegenüber liegenden Innenseiten der Rastabschnitte und/oder der Führungsabschnitte 86a, 86b, 86c, 86d angeordnet. Figur 13 zeigt die Schnellkupplung 1 im montierten Zustand in der Aufnahmeöffnung 5 des Gegenstücks 6, wobei sich die Sicherungseinrichtung 8 in der Sicherungsstellung befindet.

### Siebtes Ausführungsbeispiel

Das siebte Ausführungsbeispiel der Erfindung, welches im Wesentlichen auf dem ersten Ausführungsbeispiel gemäß Fig. 1 bis 3 basiert, wird nachstehend mit Bezug auf die Figuren 14 und 15 beschrieben. Abweichend vom ersten Ausführungsbeispiel umfasst der Stecker 2 eine im Wesentlichen kreuzförmige Struktur, wobei die Befestigungseinrichtung 9 auf einer vom Stutzen 3 abweisenden Seite der Anschlussleitungen 4 teilweise angeformt ist. Der Stecker 2 ist im Wesentlichen X-förmig ausgebildet. Figur 14a ist eine perspektivische Darstellung der Schnellkupplung 1, wobei sich die Sicherungseinrichtung 8 in der Lösestellung befindet. Figur 14b zeigt eine schematische Schnittansicht der Schnellkupplung 1 aus Figur 14a. Figur 15a ist eine perspektivische Darstellung der Schnellkupplung 1, wobei sich die Sicherungseinrichtung 8 in der Sicherungsstellung befindet. Figur 15b zeigt eine schematische Schnittansicht der Schnellkupplung 1 aus Figur 15a.

Die Sicherungseinrichtung 8 umfasst abweichend vom ersten Ausführungsbeispiel zwei Rastabschnitte mit jeweils einem verrippten Steg 83 und mit einem endseitigen Sicherungsabschnitt 85, wobei sich der Steg 83 bestimmungsgemäß parallel zur Achse A3 des Stutzens 3 erstreckt und eine der Außenkontur des Steckers 2 angepasste Innenkontur aufweist, um auf der Außenseite des Steckers 2 gleiten zu können. Am oberen Ende jedes Stegs 83 befindet sich ein Betätigungsabschnitt 87. Die beiden Betätigungsabschnitte 87 sind über zwei parallele Führungsabschnitte 86 verbunden. An jeder der einander zugewandten Innenseiten der Rastabschnitte befindet sich eine Rastaufnahme 82. Die Rastaufnahmen 82 sind in der Lösestellung und der Sicherungsstellung rastend mit Rastabschnitten 91 a, 91 b der Befestigungseinrichtung 9 in Eingriff bringbar.

Die Befestigungseinrichtung 9 umfasst drei mit den Rastabschnitten 91 a, 91 b ausgebildete Wände 90a, 90b, die parallel zueinander und voneinander beabstandet senkrecht zu den Achsen A4 der Anschlussleitungen 4 auf der vom Stutzen 2 abweisenden Seite des Steckers 2 von den Anschlussleitungen 4 hervorstehen. Die äußeren Wände 90a sind über Rippen 90c mit den kreis- und scheibenförmigen Führungsflächen 41 der Anschlussleitungen 4 einteilig verbunden. Jede Rippe 90c erstreckt sich im Wesentlichen in der Ebene, die durch die Achse A3 des Stutzens 3 und die Achsen A4 der Anschlussleitungen 4 aufgespannt wird. Die Rastabschnitte 91 a, 91b stehen im Wesentlichen senkrecht zu der besagten Ebene von beiden Seiten der Wände 90a, 90b hervor. Zwischen den äußeren Wänden 90a und der mittleren Wand 90b befinden sich zwei spaltförmige Aufnahmen, in denen die Führungsabschnitte 86 der Sicherungseinrichtung 8 beim Überführen zwischen der Lösestellung und der Sicherungsstellung gleitend geführt werden.

Zur Montage der Schnellkupplung 1 werden die Führungsabschnitte 86 der Sicherungseinrichtung 8 in die spaltförmigen Aufnahmen zwischen den Wänden 90a, 90b eingebracht. Anschließend wird ein im Wesentlichen tellerförmiger Deckel 98 auf die äußeren Wände 90a der Befestigungseinrichtung 9 aufgerastet, um die spaltförmigen Aufnahmen zwischen den Wänden 90a, 90b zu verschließen. Dadurch wird die Sicherungseinrichtung 8 unlösbar mit der Befestigungseinrichtung 9 verbunden.

Fig. 14b zeigt eine schematische Schnittansicht der Schnellkupplung gemäß Fig. 14a in der Lösestellung. Der Schnitt verläuft durch eine der beiden Wände 90a. Wie zu erkennen ist, befindet sich die Sicherungseinrichtung 8 in der Lösestellung im Rasteingriff mit der Befestigungseinrichtung 9. Dabei sind die Rastaufnahmen 82 auf die Rastabschnitte 91 a aufgerastet. Die Sicherungseinrichtung 8 befindet sich in Anlage an dem als Anschlag dienenden Deckel 98. Durch Verschiebung der Sicherungseinrichtung 8 in Einstreckrichtung (Pfeil) kann die Sicherungseinrichtung 8 von der Lösestellung in die Sicherungsstellung überführt werden.

Fig. 15b zeigt eine schematische Schnittansicht der Schnellkupplung gemäß Fig. 15a in der Lösestellung. Der Schnitt verläuft wieder durch eine der beiden Wände 90a. Wie zu erkennen ist, befindet sich die Sicherungseinrichtung 8 in der Sicherungsstellung im Rasteingriff mit der Befestigungseinrichtung 9. Dabei sind die Rastaufnahmen 82 auf die Rastabschnitte 91 b aufgerastet. Die Führungsabschnitte 86 befinden sich in dieser Stellung an den Böden der spaltförmigen Aufnahmen zwischen den Wänden 90a, 90b. Durch Verschiebung der Sicherungseinrichtung 8 entgegen der Einstreckrichtung (Pfeil) kann die Sicherungseinrichtung 8 von der Sicherungsstellung wieder in die Lösestellung überführt werden.

### Achtes Ausführungsbeispiel

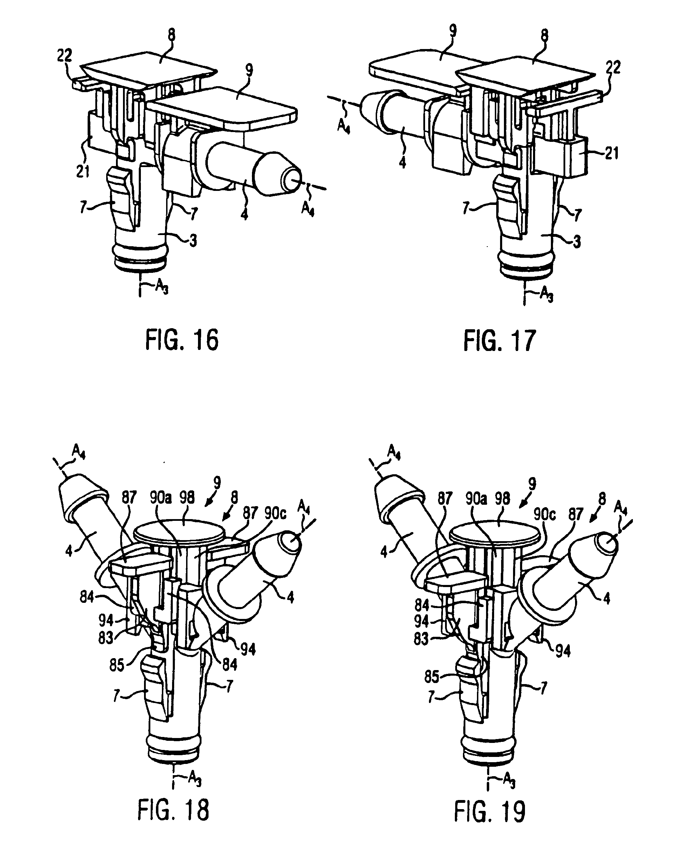

Das achte Ausführungsbeispiel der Erfindung, welches im Wesentlichen auf dem ersten Ausführungsbeispiel gemäß Figuren 1 bis 3 basiert, wird nachstehend mit Bezug auf die Figuren 16 und 17 beschrieben. Figuren 16 und 17 sind perspektivische Darstellungen der Schnellkupplung 1 von verschiedenen Seiten.

Abweichend vom ersten Ausführungsbeispiel umfasst die Schnellkupplung 1 lediglich eine Anschlussleitung 4, deren Achse A4 im Wesentlichen orthogonal zur Achse A3 des Stutzens 3 angeordnet ist. Auf der diametral entgegen gesetzten Seite von der ersten Anschlussleitung 4 befindet sich ein Ansatz 21 mit einem T-förmigen Vorsprung 22, an welchem die Befestigungseinrichtung 9 einseitig festlegbar ist. In der Sicherungsstellung befindet sich die Sicherungseinrichtung 8 in Anlage an dem T-förmigen Vorsprung 22, wobei eine entgegen der Einsteckrichtung vom Stecker 2 abweisende Oberfläche der Sicherungseinrichtung 8 mit einer entgegen der Einsteckrichtung vom Stecker 2 abweisenden Oberfläche der Befestigungseinrichtung 9 bündig abschließt. Der Stecker 2 ist im Wesentlichen L-förmig ausgebildet.

### Neuntes Ausführungsbeispiel

Das neunte Ausführungsbeispiel der Erfindung, welches im Wesentlichen auf dem siebten Ausführungsbeispiel gemäß Figuren 14 und 15 basiert, wird nachstehend mit Bezug auf die Figuren 18 und 19 beschrieben. Figuren 18 und 19 sind perspektivische Darstellungen der Schnellkupplung 1 von verschiedenen Seiten.

Abweichend vom siebten Ausführungsbeispiel erstrecken sich die Achsen A4 der Anschlussleitungen 4 in einem Winkel von jeweils ca. 135° zur Achse A3 des Stutzens 3, wobei die Achsen A4 der Anschlussleitungen 4 und die Achse A3 des Stutzens 3 jedoch in einer Ebene liegen. Der Stecker 2 ist im Wesentlichen Y-förmig ausgebildet.

Die Sicherungseinrichtung 8 umfasst wie im ersten Ausführungsbeispiel zwei Rastabschnitte mit jeweils einem verrippten Steg 83, einem endseitigen Sicherungsabschnitt 85 und zwei seitlichen Auslegern 84, wobei sich der Steg 83 bestimmungsgemäß in Einsteckrichtung parallel zur Achse A3 des Stutzens 3 erstreckt und jeder Rastabschnitt eine der Au-βenkontur des Steckers 2 angepasste Innenkontur aufweist, um auf der Außenseite des Steckers 2 gleiten zu können. Am oberen Ende jedes Stegs 83 befindet sich ein Betätigungsabschnitt 87, wobei die beiden Betätigungsabschnitte 87 über einen Führungsabschnitt verbunden sind. An jeder der einander zugewandten Innenseiten der Rastabschnitte befinden sich Rastvorsprünge und Rastaufnahmen (nicht gezeigt), die in der Lösestellung und der Sicherungsstellung rastend mit Rastabschnitten der Befestigungseinrichtung 9 in Eingriff bringbar sind.

Die Befestigungseinrichtung 9 umfasst zwei mit Rastabschnitten ausgebildete Wände 90a, die parallel zueinander und voneinander beabstandet senkrecht zur Ebene, die durch die Achse A3 des Stutzens 3 und die Achsen A4 der Anschlussleitungen 4 aufgespannt wird, auf der vom Stutzen 2 abweisenden Seite des Steckers 2 von den Anschlussleitungen 4 hervorstehen. Zwischen den Wänden 90a befindet sich eine spaltförmige Aufnahme, in welcher der Führungsabschnitt der Sicherungseinrichtung 8 beim Überführen zwischen der Lösestellung und der Sicherungsstellung gleitend geführt wird. Die Wände 90a sind über Rippen 90c mit den auf die Anschlussleitungen 4 aufrastbaren Verbindungsabschnitten 94 einteilig verbunden. Jede Rippe 90c erstreckt sich im Wesentlichen in der Ebene, die durch die Achse A3 des Stutzens 3 und die Achsen A4 der Anschlussleitungen 4 aufgespannt wird.

Zur Montage der Schnellkupplung 1 wird der Führungsabschnitt der Sicherungseinrichtung 8 in die spaltförmige Aufnahme zwischen den Wänden 90a eingebracht. Anschließend wird ein im Wesentlichen tellerförmiger Deckel 98 auf die äußeren Wände 90a und die Rippen 90c der Befestigungseinrichtung 9 aufgebracht, um die spaltförmige Aufnahme zwischen den Wänden 90a zu verschließen. Dadurch wird die Sicherungseinrichtung 8 unlösbar mit der Befestigungseinrichtung 9 verbunden.

In der Lösestellung gemäß Fig. 18 befindet sich die Sicherungseinrichtung 8 mit der Befestigungseinrichtung 9 im Rasteingriff. Dabei befindet sich die Sicherungseinrichtung 8 in Anlage an dem als Anschlag dienenden Deckel 98. Durch Verschiebung der Sicherungseinrichtung 8 in Einstreckrichtung (Pfeil) kann die Sicherungseinrichtung 8 von der Lösestellung in die Sicherungsstellung überführt werden.

In der Sicherungsstellung gemäß Fig. 19 befindet sich die Sicherungseinrichtung 8 ebenfalls im Rasteingriff mit der Befestigungseinrichtung 9. Der Führungsabschnitt befindet sich in dieser Stellung am Boden der spaltförmigen Aufnahme zwischen den Wänden 90a. Durch Verschiebung der Sicherungseinrichtung 8 entgegen der Einstreckrichtung (Pfeil) kann die Sicherungseinrichtung 8 von der Sicherungsstellung wieder in die Lösestellung überführt werden.

## Patentansprüche

1. Schnellkupplung (1) für Fluidleitungen, umfassend: einen Stecker (2) mit einem Stutzen (3) und wenigstens einer quer vom Stutzen (3) abragenden Anschlussleitung (4), wobei der Stutzen (3) dichtend in eine Aufnahmeöffnung (5) eines Gegenstücks (6) einsteckbar ist und über eine Rasteinrichtung (7) mit dem Gegenstück (6) in Rasteingriff bringbar ist; eine Sicherungseinrichtung (8), die zwischen einer Sicherungsstellung, in welcher der Rasteingriff gegen Lösen gesichert ist, und einer Lösestellung, in welcher der Rasteingriff lösbar ist, überführbar ist; und eine Befestigungseinrichtung (9), an welcher die Sicherungseinrichtung (8) in wenigstens einer Stellung festlegbar ist, **dadurch gekennzeichnet, dass** die Befestigungseinrichtung (9) auf einer vom Stutzen (2) abweisenden Seite der Anschlussleitung (6) angeordnet ist.

2. Schnellkupplung (1) nach Anspruch 1, **dadurch gekennzeichnet, dass** die Sicherungseinrichtung (8) in der Sicherungsstellung und/oder in der Lösestellung vorzugsweise kraftschlüssig und/oder formschlüssig, bevorzugt rastend, an der Befestigungseinrichtung (9) festlegbar ist.

3. Schnellkupplung (1) nach einem der vorangegangenen Ansprüche, **dadurch gekennzeichnet, dass** die Sicherungseinrichtung (8) zwischen der Sicherungsstellung und Lösestellung wenigstens abschnittsweise durch die Befestigungseinrichtung (9) und/oder durch den Stecker (2), vorzugsweise durch den Stutzen (3) und/oder durch die Anschlussleitung (4), geführt wird.

4. Schnellkupplung (1) nach einem der vorangegangenen Ansprüche, **dadurch gekennzeichnet, dass** die Sicherungseinrichtung (8) durch Verschiebung entlang der Achse (A3) des Stutzens (3) zwischen der Sicherungsstellung und der Lösestellung überführt wird.

5. Schnellkupplung (1) nach einem der vorangegangenen Ansprüche, **dadurch gekennzeichnet, dass** die Befestigungseinrichtung (9) lösbar mit dem Stecker (2), vorzugsweise mit dem Stutzen (3) und/oder mit der Anschlussleitung (4), verbunden ist.

6. Schnellkupplung (1) nach einem der vorangegangenen Ansprüche, **dadurch gekennzeichnet, dass** die Befestigungseinrichtung (9) auf den Stecker (2), vorzugsweise auf den Stutzen (3) und/oder auf die Anschlussleitung (4), aufgesteckt ist.

7. Schnellkupplung (1) nach einem der vorangegangenen Ansprüche, **dadurch gekennzeichnet, dass** die Befestigungseinrichtung (9) fest, unverlierbar und/oder unlösbar mit dem Stecker (2), vorzugsweise mit dem Stutzen (3) und/oder mit der Anschlussleitung (4), verbunden ist, bevorzugt zumindest abschnittsweise einteilig mit dem Stecker (2) ausgebildet ist.

8. Schnellkupplung (1) nach einem der vorangegangenen Ansprüche, **dadurch gekennzeichnet, dass** die Befestigungseinrichtung (9) den Stutzen (3) und/oder die Anschlussleitung (4) vollumfänglich umschließt.

9. Schnellkupplung (1) nach einem der vorangegangenen Ansprüche, **dadurch gekennzeichnet, dass** die Schnellkupplung (1) eine Verriegelungseinrichtung (96) aufweist, mit welcher die Sicherungseinrichtung (8) in wenigstens einer Stellung, vorzugsweise in der Sicherungsstellung, gegenüber der Befestigungseinrichtung (9) verriegelbar ist.

10. Schnellkupplung (1) nach einem der vorangegangenen Ansprüche, **dadurch gekennzeichnet, dass** die Sicherungseinrichtung (8) und die Befestigungseinrichtung (9) Oberflächen aufweisen, die in einer Stellung, vorzugsweise in der Sicherungsstellung der Sicherungseinrichtung (8), bündig zueinander angeordnet sind.

11. Schnellkupplung (1) nach einem der vorangegangenen Ansprüche, **dadurch gekennzeichnet, dass** die Anschlussleitung (4) wenigstens eine Führungsfläche (41, 42) aufweist, um die Sicherungseinrichtung (8) bei der Überführung zwischen der Sicherungsstellung und Lösestellung gleitend zu führen und/oder um die Befestigungseinrichtung (9) verdrehsicher und/oder verschiebesicher gegenüber dem Stecker (2) zu positionieren.

12. Schnellkupplung (1) nach einem der vorangegangenen Ansprüche, **dadurch gekennzeichnet, dass** die Anschlussleitung (4) zwei Führungsflächen (41, 42) aufweist, die entlang der Achse (A4) der Anschlussleitung (4) beabstandet sind.

13. Schnellkupplung (1) nach einem der vorangegangenen Ansprüche, **dadurch gekennzeichnet, dass** die Rasteinrichtung (7) zwei federnde Rastarme umfasst, die in Umfangsrichtung des Stutzens (3) versetzt zu der Anschlussleitung (4) vom Stutzen (3) hervorstehen.

14. Schnellkupplung (1) nach einem der vorangegangenen Ansprüche, **dadurch gekennzeichnet, dass** der Stecker (2) im Wesentlichen X-förmig, T-förmig, Y-förmig oder L-förmig ausgebildet ist, wobei der Stecker (2) vorzugsweise zwei Anschlussleitungen (4) aufweist, deren Achsen (A4) in einer Ebene liegen, oder deren Achsen (A4) in zwei Ebenen liegen, die sich im Bereich der Achse (A3) des Stutzens (3) schneiden.

15. Bausatz für eine Schnellkupplung (1) für Fluidleitungen, umfassend: einen Stecker (2) mit einem Stutzen (3) und wenigstens einer quer vom Stutzen (3) abragenden Anschlussleitung (4), wobei der Stutzen (3) dichtend in eine Aufnahmeöffnung (5) eines Gegenstücks (6) einsteckbar ist und über eine Rasteinrichtung (7) mit dem Gegenstück (6) in Rasteingriff bringbar ist; eine Sicherungseinrichtung (8), um den Rasteingriff gegen Lösen zu sichern; und eine Befestigungseinrichtung (9), um die Sicherungseinrichtung (8) in wenigstens einer Stellung festzulegen, **dadurch gekennzeichnet, dass** der Stecker (2), die Sicherungseinrichtung (8) und die Befestigungseinrichtung (9) derart miteinander verbindbar sind, dass die Sicherungseinrichtung (8) zwischen einer Sicherungsstellung, in welcher der Rasteingriff gegen Lösen gesichert ist, und einer Lösestellung, in welcher der Rasteingriff lösbar ist, überführbar ist und die Sicherungseinrichtung (8) in wenigstens einer Stellung an der Befestigungseinrichtung (9) festlegbar ist.
